# FASCICULE DE BREVET EUROPEEN

(11) **EP 4 067 226 B1**
(45) Date de publication et mention de la délivrance du brevet: **17.07.2024**
(21) Numéro de dépôt: 22165399.1
(22) Date de dépôt: 30.03.2022
(51) Int. Cl.: B64C 1/40, F16C 27/06, F16C 29/00, F16C 27/02, F16B 5/02, B64C 1/18, F16B 7/18

(54) **ENSEMBLE DE LIAISON ENTRE DEUX STRUCTURES D'UN AERONEF, PARTIE D'AERONEF COMPRENANT UN TEL ENSEMBLE, ET AERONEF**
ANORDNUNG ZUR VERBINDUNG VON ZWEI STRUKTUREN EINES LUFTFAHRZEUGS, LUFTFAHRZEUGTEIL MIT EINER SOLCHEN ANORDNUNG UND LUFTFAHRZEUG
ASSEMBLY FOR CONNECTION BETWEEN TWO STRUCTURES OF AN AIRCRAFT, PART OF AN AIRCRAFT COMPRISING SUCH AN ASSEMBLY, AND AIRCRAFT

(30) Priorité: 31.03.2021 FR 2103310
(43) Date de publication de la demande: 05.10.2022
(73) Titulaire: Airbus Operations, 31060 Toulouse (FR)
(72) Inventeur: GOUPIL, Frédéric, 31060 TOULOUSE (FR); MATHEIS, Xavier, 31060 TOULOUSE (FR)
(74) Mandataire: Cabinet Le Guen Maillet

(56) Documents cités:
- WO-A1-2016/034649
- WO-A1-2019/198393
- DE-A1- 4 036 538
- GB-A- 2 471 563
- US-A- 6 017 073
- US-A1- 2004 101 360

## Description

### DOMAINE TECHNIQUE

La présente invention concerne l'assemblage de structures d'aéronef. L'invention concerne plus particulièrement l'assemblage de rails de plancher d'un aéronef à d'autres éléments d'une structure primaire de cet aéronef, notamment au-dessus d'un compartiment de train d'atterrissage ou d'un caisson central de voilure.

### ÉTAT DE LA TECHNIQUE ANTÉRIEURE

Des dispositifs de liaison sont utilisés pour assurer un transfert de charge entre des sièges de passagers d'un aéronef et des éléments de la structure primaire de l'aéronef. Une zone spécifique de l'aéronef, au-dessus d'un compartiment de train d'atterrissage ou d'un caisson central de voilure, présente des contraintes particulières pour la fixation d'un plancher recevant des sièges destinés à l'installation de passagers (encore appelé « plancher passagers »). En effet, dans une telle zone, des contraintes structurelles amènent un encombrement conséquent et aucune poutre transversale ne peut alors être utilisée pour la fixation d'un plancher.

Des systèmes de liaison entre un plancher recevant des sièges passagers et des éléments de structure primaire existent, mais ceux-ci présentent plusieurs inconvénients. Par exemple, l'installation, le réglage et le gréement de rails de plancher sont complexifiés par un nombre important d'outils et d'accessoires à utiliser quasi-simultanément. En outre, des tolérances d'assemblage élevées, selon plusieurs axes d'assemblage, conduisent à des difficultés de montage, voire à des problèmes de planéité du plancher, susceptibles, par exemple, de nuire à la perception de la qualité d'assemblage de l'aéronef que pourraient alors avoir des exploitants de celui-ci. Enfin, des liaisons fixes utilisées sont de nature à transmettre des vibrations entre la structure primaire d'un aéronef et son plancher passagers, en provenance du fuselage ou des moteurs, par exemple, ce qui génère des phénomènes vibratoires et un niveau de bruit conséquent, notamment à l'intérieur de la cabine dans laquelle sont installés les passagers.

La situation peut donc être améliorée.

Les documents US 2004/101360 A1, WO 2019/198393 et US 6017073 A divulguent des ensembles de liaison de l'art antérieur.

### EXPOSÉ DE L'INVENTION

Un objet de la présente invention est de proposer un ensemble de liaison optimisé entre deux structures d'un aéronef.

A cet effet, il est proposé un ensemble de liaison déformable entre deux structures d'aéronef comprenant un élément central présentant un trou de passage, préférentiellement un alésage, agencé pour opérer une liaison avec l'une des deux structures grâce à un élément de fixation comportant une tige insérée dans le trou de passage, l'ensemble de liaison comprenant en outre une pluralité d'éléments amortisseurs déformables, dits premiers éléments amortisseurs, chacun des premiers éléments amortisseurs étant solidaire de l'élément central d'une part, et configuré pour prendre appui sur une surface de l'autre structure parmi les deux structures, d'autre part.

Un tel agencement permet notamment un assemblage facilité, plus rapide, ainsi qu'un filtrage amélioré de vibrations en provenance du fuselage de l'aéronef.

Selon un mode de réalisation, l'ensemble de liaison comprend en outre au moins deux autres éléments amortisseurs, dits seconds éléments amortisseurs, fabriqués en matériau déformable, solidaires de l'élément central d'une part, et s'étendant jusqu'à une distance prédéterminée d'une surface de l'autre structure, d'autre part, les seconds éléments amortisseurs comprenant éventuellement un ou plusieurs inserts métalliques ou faits d'un autre matériau que ledit matériau déformable, et/ou une ou plusieurs cavités agencées dans ledit matériau déformable.

Avantageusement, les premiers éléments amortisseurs s'étendent chacun extérieurement, à partir de l'élément central, suivant une direction perpendiculaire à un axe longitudinal du trou de passage.

Selon un mode de réalisation, les premiers éléments amortisseurs sont des empilements de couches alternées respectivement faites d'un matériau déformable et d'un matériau autre que ledit matériau déformable.

Avantageusement, les seconds éléments amortisseurs s'étendent chacun extérieurement à partir de l'élément central suivant une direction perpendiculaire à l'axe longitudinal du trou de passage, différente de la direction selon laquelle s'étendent les premiers éléments amortisseurs.

Selon un mode de réalisation, l'ensemble de liaison présente six faces, parallèles deux à deux, parmi lesquelles :
- deux faces dites « premières faces » sont traversées par le trou de passage, l'axe longitudinal définissant une première direction de référence,
- deux faces dites « secondes faces » portent les premiers éléments amortisseurs, monoblocs, ou encore sous la forme d'empilements de couches alternées faites d'un matériau déformable et d'éléments faits d'un autre matériau que ledit matériau déformable, s'étendant à partir de l'élément central dans une deuxième direction de référence, perpendiculaire à l'axe longitudinal du trou de passage,
- deux faces dites « troisièmes faces » portent les seconds éléments amortisseurs s'étendant chacun extérieurement à partir de l'élément central suivant une troisième direction de référence, perpendiculaire à l'axe longitudinal du trou de passage, et perpendiculaire à la deuxième direction de référence.

Avantageusement, la troisième direction de référence est parallèle à un axe longitudinal du fuselage d'un aéronef, la deuxième direction de référence est comprise dans un plan vertical ou sensiblement vertical et la première direction de référence est comprise dans un plan horizontal ou sensiblement horizontal.

Selon un mode réalisation, les empilements de couches alternées comprennent chacun au moins deux couches du matériau déformable et deux éléments faits d'un autre matériau, préférentiellement métallique.

Selon un mode de réalisation, le matériau déformable est un élastomère et l'élément de fixation est un boulon comprenant une vis allongée et un écrou, la vis comprenant une portion de tige configurée pour être insérée dans le trou de passage de l'élément central de l'ensemble de liaison.

L'invention a également pour objet une partie d'aéronef comprenant une première structure, une deuxième structure et un ensemble de liaison tel que décrit, configuré et assemblé pour relier la première structure à la deuxième structure, dans laquelle :
- la première structure comprend une cavité traversante, de forme complémentaire à un profil extérieur de l'ensemble de liaison, agencée pour y loger l'ensemble de liaison, la partie opposée de chacun desdits premiers éléments amortisseurs venant prendre appui sur ou étant fixée solidairement à une surface de la cavité,
- la deuxième structure comprend une rainure agencée pour accueillir une partie de la première structure comprenant la cavité, chacun des bords de la rainure comprenant une ouverture de passage parmi deux ouvertures de passage disposées en regard l'une de l'autre, et, dans laquelle,
- l'élément de fixation est un boulon traversant les ouvertures des bords de la rainure et le trou de passage de l'élément central de l'ensemble de liaison.

Selon un mode de réalisation, le trou de passage de la partie d'aéronef est un premier alésage présentant un premier diamètre et un premier axe longitudinal central, et un guide d'insertion est assemblé sur l'un des bords extérieurs de la rainure, le guide d'insertion comprenant un second alésage d'un second diamètre légèrement supérieur au diamètre du premier alésage, et le second alésage présentant un second axe longitudinal central confondu ou sensiblement confondu avec le premier axe longitudinal central du trou de passage, les ouvertures de passage présentant un diamètre supérieur au premier diamètre et préférentiellement égal au second diamètre.

L'invention a de plus pour objet un aéronef comprenant une partie d' aéronef telle que précédemment décrite et comprenant donc un ensemble de liaison tel que précité.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] est un schéma de principe illustrant un ensemble de liaison entre deux structures d'un aéronef selon un mode de réalisation ;
[Fig. 2] est une représentation schématique illustrant des moyens de fixation de l'ensemble de liaison déjà illustré sur la Fig. 1 à deux structures d'un aéronef, selon un mode de réalisation ;
[Fig. 3] est une représentation schématique illustrant l'ensemble de liaison déjà représenté sur les Fig. 1 et Fig. 2 fixé dans une cavité traversante d'une structure d'un aéronef, selon un mode de réalisation ;
[Fig. 4] est une vue en perspective d'une partie d'aéronef comprenant un ensemble de liaison entre deux structures d'aéronef selon le principe déjà illustré sur la Fig. 1, et selon un mode de réalisation de l'invention ;
[Fig. 5] est une vue en perspective d'un ensemble de liaison entre deux structures d'aéronef, selon le principe déjà illustré sur la Fig. 1, la vue comprenant des coupes d'éléments structurels ;
[Fig. 6] est une coupe d'une partie d'aéronef comprenant un ensemble de liaison selon le principe déjà représenté sur la Fig. 1, en cours d'assemblage, et selon un mode de réalisation ;
[Fig. 7] est une coupe d'une partie d'aéronef comprenant l'ensemble de liaison déjà représenté sur la Fig. 6, après assemblage ;
[Fig. 8] est une coupe d'une partie d'aéronef comprenant un ensemble de liaison selon le principe déjà représenté sur la Fig. 1, après assemblage, selon une variante du mode de réalisation illustré sur les Fig. 6 et Fig. 7 ; et,
[Fig. 9] est une représentation schématique d'un aéronef comprenant une partie d' aéronef telle que déjà représentée sur les Fig. 5, Fig. 6, Fig. 7 et Fig. 8.

### EXPOSÉ DÉTAILLÉ DE MODES DE RÉALISATION

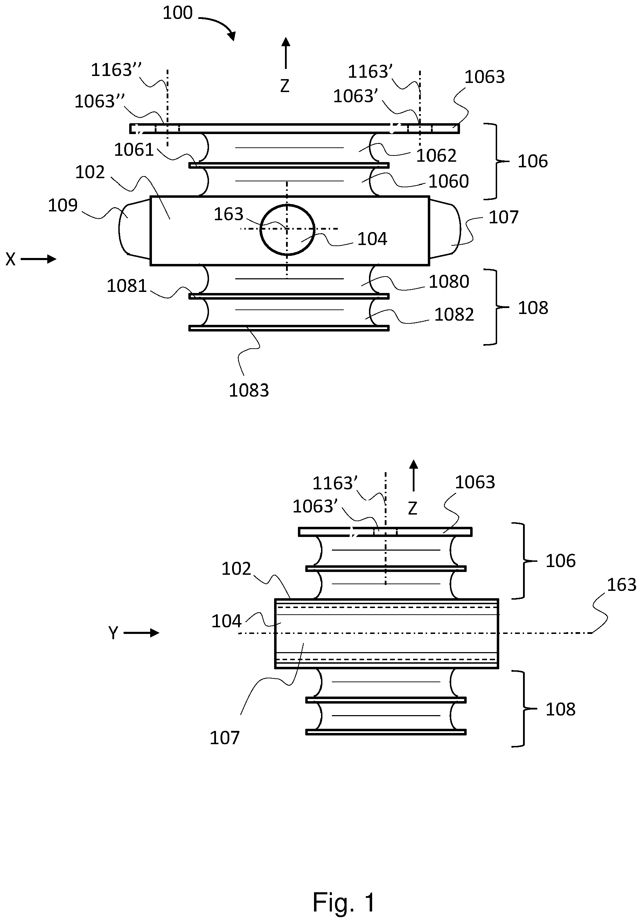

La partie supérieure de la Fig. 1 représente schématiquement un ensemble de liaison 100 destiné à opérer une liaison mécanique entre deux structures d'un aéronef, telles que, par exemple, une structure primaire, ou un élément de structure primaire, d'une part, et un autre élément de structure primaire d'autre part. Selon l'exemple décrit ci-après, l'ensemble de liaison est configuré pour opérer une liaison entre un élément de structure primaire d'un compartiment de train d'atterrissage ou d'un caisson central de voilure, d'une part, un rail de plancher passagers, d'autre part. Un tel exemple n'est pas limitatif et l'ensemble de liaison 100 pourrait aussi bien être utilisé pour opérer une liaison entre deux éléments faisant partie chacun d'une structure primaire, secondaire ou tertiaire d'un aéronef.

Selon l'exemple décrit, une liaison est opérée entre une ferrure de structure primaire d'un aéronef, d'une part, et un rail en « U » inversé d'une structure de plancher passagers de ce même aéronef, d'autre part.

Pour ce faire, l'ensemble de liaison 100 illustré sur la Fig. 1 comprend un élément central 102 dans lequel est agencé un trou de passage 104. Le trou de passage 104 est préférentiellement un alésage. Le trou de passage 104 est de forme globalement longiligne. Deux empilements 106 et 108, solidaires de l'élément central 102, s'étendent extérieurement à partir de l'élément central 102. Chacun de ces deux empilements 106 et 108 comprend une alternance de couches respectivement faites d'un matériau déformable et de métal. Par exemple, les couches faites d'un matériau déformable sont fabriquées en élastomère et les couches faites de métal sont, par exemple, des plaques en acier ou de tôle répondant à des caractéristiques précises, notamment en termes de dimensions, et en particulier en termes d'épaisseur. L'élastomère utilisé répond lui aussi à des caractéristiques précises en fonction de la résistance à la compression et à la traction recherchée, ainsi qu'à la résistance au cisaillement recherchée. Selon un mode de réalisation, l'empilement 106, fixé sur la partie supérieure de l'élément central 102, comprend une première couche de matériau déformable 1060, une première couche (ou plaque) de métal 1061, une seconde couche de matériau déformable 1062, une seconde couche (ou seconde plaque) de métal 1063. Les couches 1060, 1061, 1062 et 1063 constituent alors un empilement alterné de couches de matériau déformable et de couches métalliques. Selon un mode de réalisation, l'empilement 108 fixé sur la partie inférieure de l'élément central 102, comprend une première couche de matériau déformable 1080, une première couche (ou plaque) de métal 1081, une seconde couche de matériau déformable 1082, une seconde couche (ou seconde plaque) de métal 1083. Les couches 1080, 1081, 1082 et 1083 constituent un empilement de couches alternées de matériaux. Selon un mode de réalisation, la plaque de métal 1063 comprend deux perforations 1063' et 1063" agencées pour pourvoir y insérer, par exemple, des boulons permettant une fixation à une structure. Les perforations 1063' et 1063" sont respectivement agencées selon des axes centraux 1163' et 1163". Les perforations 1063' et 1063" sont en d'autres termes des trous de passage dans la couche (ou plaque) de métal 1063 configurés pour y engager des boulons ou encore d'autres éléments de fixation équivalents, aux fins de coupler l'ensemble de liaison 100 à une structure ou à un élément structurel. L'ensemble de liaison 100 peut donc être ainsi fixé d'une part à une première structure ou à un premier élément structurel grâce à un premier élément de fixation comprenant une tige insérée dans le trou de passage 104, par exemple un boulon traversant le trou de passage 104 lorsque celui-ci est un alésage, et être fixé, d'autre part, à une deuxième structure ou un élément d'une deuxième structure grâce à des éléments de fixation respectivement insérés dans les perforations 1063' et 1063" de la plaque de métal 1063. Ces éléments de fixation sont, par exemple, des boulons et les perforations 1063' et 1063" sont par exemple des alésages. Il est à noter, qu'à des fins de description et pour mieux expliciter des transferts de forces opérés via l'ensemble de liaison 100, il est défini ici et par convention qu'un axe longitudinal du trou de passage 104, par exemple son axe central 163, décrit une direction Y, dite direction de référence Y. Également par convention, et aux mêmes fins, une direction Z, dite direction de référence Z, représentée par une flèche Z sur la Fig. 1, est définie. Cette direction Z est perpendiculaire ou sensiblement perpendiculaire à la direction Y. Toujours selon le même raisonnement, et aux mêmes fins, une direction X, dite direction de référence X, représentée par une flèche X sur la Fig. 1 est définie. Cette direction X est perpendiculaire ou sensiblement perpendiculaire à la direction de référence Z ainsi qu'à la direction de référence Y et est avantageusement orientée parallèlement à un axe longitudinal du fuselage d'un aéronef comprenant un tel ensemble de liaison. Préférentiellement, les directions X, Y et Z sont ainsi perpendiculaires entre elles et forment un repère orthonormé ou en d'autres termes un repère cartésien tridimensionnel.

Selon un mode de réalisation de l'invention, les empilements 106 et 108 s'étendent à partir de l'élément central 102 de l'ensemble de liaison 100, vers l'extérieur, selon la direction de référence Z. Les couches les plus à l'extérieur, soit en l'occurrence les couches 1063 et 1083 sont avantageusement configurées chacune pour prendre appui sur une surface d'une structure autre que celle liée à l'ensemble de liaison 100 via le trou de passage 104. Avantageusement, les couches 1063 et 1083 sont donc configurées pour prendre appui sur la structure, parmi les deux structures reliées par l'ensemble 100, qui n'est pas fixée à l'ensemble 100 par un élément de fixation inséré dans le trou de passage 104. Ainsi, l'ensemble de liaison 100, déformable en compression et en cisaillement, est configuré pour opérer une liaison déformable de nature à faciliter son assemblage (l'assemblage de la liaison) grâce à sa capacité à absorber les variations de la structure s'y attachant, car cette dernière, possiblement composée de plusieurs « sous-éléments », peut créer des disparités en termes de positionnement de points de fixation. L'ensemble de liaison 100 est en outre avantageusement capable de filtrer les vibrations entre une première et une deuxième structure qu'il relie.

Selon un mode de réalisation, l'ensemble de liaison 100 comprend en outre au moins deux éléments amortisseurs 107 et 109, également fabriqués en matériau déformable, fixés solidairement à l'élément central 102. Selon un mode de réalisation de l'invention, les éléments amortisseurs 107 et 109 s'étendent chacun jusqu'à une distance prédéterminée d'une surface de la structure qui n'est pas connectée à l'ensemble de liaison 100 via le trou de passage 104 de l'élément central 102. Avantageusement, le jeu fonctionnel ainsi créé permet de faciliter conséquemment le montage. Selon un mode de réalisation, la distance prédéterminée entre la surface d'appui extérieure de chacun des éléments amortisseurs 107 et 109 et une surface de la structure sur laquelle ils sont destinés à s'appuyer en cas de déformation de l'ensemble 100, est la même pour les deux éléments amortisseurs 107 et 109. Selon une variante, cette distance prédéterminée permettant à l'ensemble de liaison 100 de se déformer selon la direction X avant que l'un des éléments amortisseurs 107 ou 109 n'entre en contact avec une surface de structure, est différente pour chacun des éléments amortisseurs 107 et 109. Avantageusement, cela permet à la fois de faciliter le montage et d'opérer un rôle d'amortisseur une fois la liaison assemblée entre les deux structures. Selon un mode de réalisation, les éléments amortisseurs 107, 109 comprennent chacun un ou plusieurs inserts métalliques et/ou une ou plusieurs cavités agencées dans le matériau déformable, ce qui leur confère alors une structure proche de celle des empilements 106 et 108.

Selon un mode de réalisation, la distance prédéterminée est comprise entre 1 mm et 5 mm, préférentiellement entre 1 mm et 3 mm, encore plus préférentiellement entre 1 mm et 2 mm.

Selon un mode de réalisation, la distance prédéterminée entre les éléments amortisseurs 107 et 109 et les surfaces d'appui qu'ils rencontrent est nulle et le jeu fonctionnel correspondant et facilitant le montage est implémenté au moyen de la présence d'au moins une cavité dans chacun des éléments amortisseurs 107 et 109.

Astucieusement, une alternance de couches de matériau déformable et de couches de métal pour les empilements 106 et 108, et une alternance différente de couches de matériau déformable et de couches de métal (ou de cavités) pour les éléments amortisseurs 107 et 109, permet un contrôle précis et ajusté des caractéristiques de résistance à la compression et de résistance au cisaillement de l'ensemble de liaison 100.

La partie inférieure de la Fig. 1 représente schématiquement l'ensemble de liaison 100 déjà représenté sur la partie haute de la Fig. 1 lorsque celui-ci est vu depuis la droite, sur cette partie de la Fig. 1. Il est possible d'y voir que le trou de passage 104 est, selon l'exemple illustré, un alésage réalisé autour d'un axe 163 de l'alésage 104, qui définit conventionnellement la direction Y. L'axe 163 est l'axe central de l'alésage 104. Il est possible de voir également que, selon l'exemple décrit, les empilements 106 et 108 de couches alternées s'étendent à partir de l'élément central 102, vers l'extérieur, suivant une direction parallèle à la direction de référence Z et les éléments amortisseurs 107 et 109 s'étendent à partir de l'élément central 102, vers l'extérieur, suivant une direction parallèle à la direction de référence X. Selon un mode de réalisation de l'invention, les différentes couches des empilements 106 et 108 sont assemblées par collage, et les empilements 106 et 108, ainsi que les éléments amortisseurs 107 et 109 sont fixés à l'élément central 102 également par collage, par exemple lors d'une phase de cuisson.

Selon une variante, l'assemblage des différents éléments de l'ensemble de liaison 100 est réalisé lors d'une opération de moulage.

Selon un mode de réalisation de l'invention, l'élément central est préférentiellement parallélépipédique, de sorte à présenter six faces, parallèles deux à deux et respectivement nommées « premières faces », « secondes faces » et « troisièmes faces ».

Les deux faces dites « premières faces » de l'élément central 102 sont traversées par le trou de passage 104 dont l'axe longitudinal 163 définit la direction de référence Y. Les deux faces dites « secondes faces » portent les empilements de couches alternées 106 et 108 faites d'un matériau déformable et d'éléments métalliques, s'étendant à partir de l'élément central 102 suivant la direction de référence Z, perpendiculaire à l'axe longitudinal 163 du trou de passage 104, et donc perpendiculaire à la direction de référence Y. Les deux faces dites « troisièmes faces » portent les éléments amortisseurs 107 et 109, s'étendant chacun extérieurement à partir de l'élément central 102 suivant la direction de référence X, perpendiculaire à l'axe longitudinal 163 du trou de passage104, et à la fois perpendiculaire à la direction de référence Z.

Ainsi, lorsque la plaque de métal 1063 est fixée à l'intérieur d'un rail formé en « U » inversé d'une structure de plancher passagers, le rail étant assemblé longitudinalement selon un axe longitudinal d'un fuselage d'aéronef, et que l'élément central 102 est fixé solidairement à une structure primaire de l'aéronef, l'ensemble de liaison 100 assure avantageusement un transfert de charges subies le long du rail et depuis les sièges passagers vers le reste de la structure primaire dans la zone d'utilisation de l'ensemble de liaison 100, et vice-versa. Un premier avantage réside dans le fait que l'ensemble de liaison 100 opère un filtrage amélioré des chocs, des vibrations et donc des bruits en provenance du fuselage vers le plancher et les sièges passagers qui y sont attachés.

Avantageusement, la structure de l'ensemble de liaison 100 comprenant un empilement (« sandwich ») d'élastomère et de métal présente des raideurs non linéaires définies avec précision selon un concept dit de « flexibilités différenciées et non-linéaires ». En effet, l'élément central 102 peut se déplacer selon les directions de références X, Y et Z par rapport à la structure fixée à la plaque supérieure terminale 1063. Un deuxième avantage est que l'installation d'un rail de plancher grâce à un ensemble de liaison 100 est grandement simplifiée et donc plus rapide. En effet, le déplacement possible de l'élément central 102 selon les directions de références X, Y et Z par rapport à la structure fixée à la plaque supérieure terminale 1063 permet d'absorber, lors de l'assemblage, les tolérances d'installation et d'usinage. Ainsi, après fixation, un rail de plancher passagers fixé à la plaque terminale 1063 est avantageusement totalement découplé de la structure primaire de l'aéronef reliée à l'élément central 102, ou une partie de celle-ci reliée à l'élément central 102, c'est-à-dire qu'aucune liaison rigide ne relie le rail de plancher passagers à la structure primaire, par exemple la structure d'un compartiment de train d'atterrissage ou d'un caisson central de voilure ou un élément de l'une de ces structures. Avantageusement, tout mouvement relatif du rail de plancher passagers fixé par l'intermédiaire de la plaque (ou couche de métal) 1063 par rapport à la structure primaire d'un compartiment de train d'atterrissage ou d'un caisson central de voilure, par exemple, entraîne une déformation des empilements 106 et 108 ce qui permet de filtrer ou d'atténuer fortement les bruits, les vibrations et les chocs en provenance du fuselage vers la structure du rail, et donc vers les sièges passagers. Avantageusement, et grâce à l'utilisation d'une structure « sandwich » élastomère-métal, il est possible de contrôler des caractéristiques à la fois de raideur et de non-linéarité de l'ensemble de liaison 100, et donc d'une liaison mécanique réalisée par un ensemble de liaison semblable à l'ensemble de liaison 100. Avantageusement, différents ensembles de liaison suivant le principe précité, présentant des caractéristiques distinctes de raideur et de non-linéarité, peuvent être utilisés à différents endroits de la structure d'un aéronef, en fonction des besoins de liaison et de filtrage, et donc en fonction d'ajustements spécifiques. Par exemple, des ensembles de liaison suivant le principe décrit peuvent comprendre plus d'alternances de couches alternées d'élastomère et de métal que d'autres. Un avantage important de la structure sandwich décrite est qu'il est possible d'obtenir un rapport élevé entre les raideurs en compression et en cisaillement. De plus, l'utilisation des éléments amortisseurs 107 et 109 permet d'obtenir un effet « pare-chocs » grâce à une course libre selon la direction de référence X avant compression des éléments amortisseurs 107 et 109 (l'un ou l'autre, selon le sens de déplacement) sur une surface rigide, du fait de la présence d'une distance prédéterminée entre l'ensemble de liaison 100 et les surfaces d'appui rencontrées, ou encore du fait de la présence d'au moins une cavité dans chacun des éléments amortisseurs 107 et 109. Les écarts existants selon la direction de référence X, entre les éléments amortisseurs et les surfaces d'appui rencontrées sont tels que de faibles forces sont nécessaires à l'installation de l'ensemble de liaison 100.

Avantageusement, pour que les transferts de charges soient optimaux entre la structure plancher passagers 150 et la structure primaire 130, et que l'assemblage de ces deux structures soit le plus aisé possible, la direction X de référence est parallèle à un axe longitudinal du fuselage de l'aéronef qui embarque ces structures, la direction de référence Z est comprise dans un plan vertical ou sensiblement vertical et la direction Y de référence est comprise dans un plan horizontal ou sensiblement horizontal.

La faible rigidité de cisaillement selon l'axe X de l'ensemble de liaison 100 autorise une absorption des jeux mécaniques au montage issus desdites distances prédéterminées ou des cavités présentes dans les éléments amortisseurs, et l'incompressibilité remarquable du matériaux élastomère autorise un filtrage optimal et un transfert de charges entre les deux structures.

Selon un autre mode de réalisation, tout ou partie des couches ou plaques métalliques des empilements 106 et 108 et/ou des éléments amortisseurs 107 et 109 sont remplacées par couches ou plaques faites d'un matériau autre que du métal. Ainsi, les couches ou plaques 1061, 1063, 1081 et 1083 peuvent être réalisées dans un matériau composite, un matériau thermoplastique, un matériau fait de tissu et/ou de bois, ces exemples n'étant pas limitatifs. Plus généralement, tout matériau dont le module d'élasticité est au moins plusieurs centaines de fois supérieur à celui de l'élastomère peuvent convenir pour la réalisation des empilements 106 et 108 ou encore pour l'insertion de couches intermédiaires dans les éléments amortisseurs 107 et 109, le cas échéant.

Selon un autre mode de réalisation encore, les empilements 106 et 108 sont remplacés par des éléments amortisseurs « monoblocs » et ne comprennent pas de couches intermédiaires métalliques ou faites d'un autre matériau que le matériau déformable, telles que les couches ou plaques 1061, 1063, 1081 et 1083 précédemment décrites. En d'autres termes et selon ce mode de réalisation, les éléments amortisseurs 106 et 108 ne sont pas lamifiés selon la direction Z et/ou les éléments amortisseurs 107 et 109 ne sont pas lamifiés selon la direction X. Selon ce mode de réalisation, les éléments amortisseurs 106 et 108 sont alors uniquement faits d'un matériau déformable, tel que, par exemple de l'élastomère, et constituent alors des éléments amortisseurs similaires aux éléments amortisseurs 107 et 109, en termes de structure. Avantageusement, l'agencement selon lequel des éléments amortisseurs monoblocs s'étendent à partir de l'élément central 102 suivant la direction de référence Z, d'une part et d'autres éléments amortisseurs s'étendent à partir de l'élément central 102 suivant la direction de référence X, d'autre part, permet toutefois de bénéficier avantageusement, malgré une structure simplifiée d'au moins les éléments amortisseurs 106 et 108, de caractéristiques distinctes en termes de déformation et de transfert de charges, selon différentes directions.

Selon ce mode réalisation, les « empilements » 106 et 108 décrits selon d'autres modes de réalisation sont donc à considérer comme des premiers éléments amortisseurs 106 et 108 et les éléments amortisseurs 107 et 109 sont à considérer comme des seconds éléments amortisseurs 107 et 109.

Avantageusement, lorsque les premiers éléments amortisseurs 106 et 108 sont monoblocs et faits uniquement d'un matériau déformable, tel que, par exemple de l'élastomère, ils peuvent toutefois comprendre chacun une ou plusieurs cavités de dimensions réduites de nature à faciliter l'insertion de l'ensemble de liaison 100 dans une cavité de forme complémentaire à la forme générale du module.

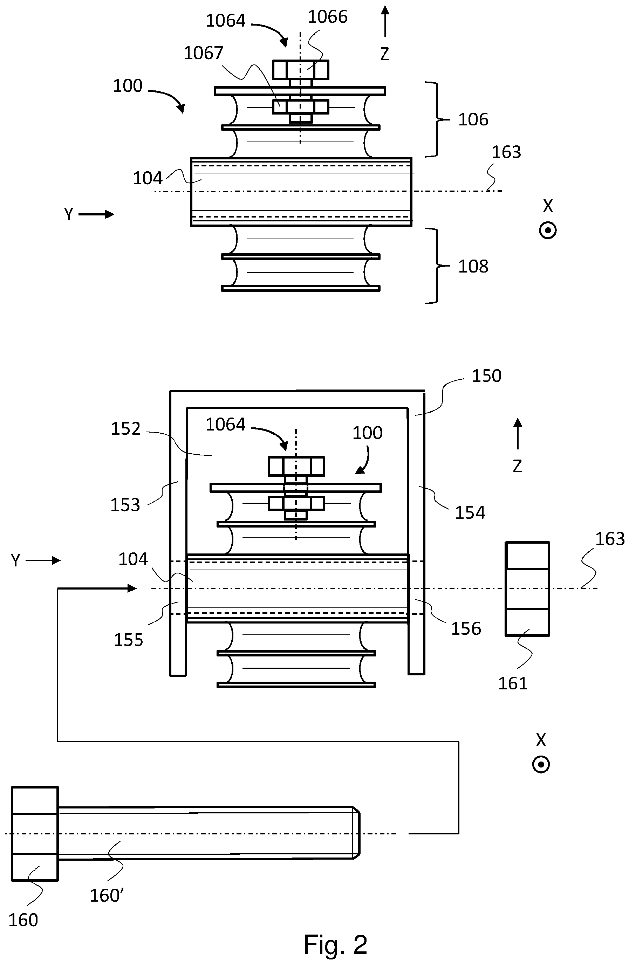

La partie supérieure de la Fig. 2 représente l'ensemble de liaison 100 lorsque des éléments de fixation de type boulon sont insérés dans les perforations 1063' et 1063" de la plaque de métal 1063. Sur la vue représentée, un boulon 1064 inséré dans la perforation 1063' est visible. Le boulon 1064, par exemple, comprend une vis 1066 combinée à un écrou 1067. Ainsi, selon l'exemple décrit, l'ensemble de liaison 100 est configuré pour être fixé à l'une des structures reliées par la plaque de métal 1063 terminale de l'empilement 106. Bien évidemment, une telle fixation pourrait aussi être réalisée par la plaque de fixation terminale 1083 de l'empilement 108, ou encore par les deux plaques terminales 1063 et 1083 à la fois, en fonction de la forme de chacune des deux structures assemblées, et reliées par l'ensemble de liaison 100.

La partie inférieure de la Fig. 2 représente schématiquement une liaison entre l'ensemble de liaison 100 et une structure 150 à l'aide d'un élément de fixation de type boulon composé d'une vis 160 et d'un écrou 161. Selon un mode de réalisation, la structure 150 est un rail de plancher passagers présentant un profil en « U » inversé. Dans la présente description, l'intérieur du rail en « U » inversé est considéré comme une rainure agencée dans la structure 150, et les bords du rail en « U » inversé sont appelés bords de la rainure. Ainsi la structure 150, soit en l'occurrence le rail de plancher passagers, présente une rainure 152 et deux flancs encore nommés bords de rainure 153 et 154 qui délimitent la rainure 152 selon la direction de référence Y. Les bords 153 et 154 de la rainure 152 de la structure 150 présentent chacun une ouverture. Une ouverture 155 est agencée dans le bord 153, et une ouverture 156 est agencée dans le bord 154 en regard de l'ouverture 155. Les ouvertures 155 et 156 sont agencées pour que, lorsque le rail 150 est positionné de sorte qu'il chevauche l'ensemble de liaison 100, une fixation de l'ensemble de liaison 100 et du rail 150 est possible à l'aide d'un boulon comprenant la vis 160 et l'écrou 161 lorsque la tige 160' du boulon est insérée complètement dans le trou de passage 104 de l'élément central 102 de l'ensemble de liaison 100. Selon cet assemblage, la portion de tige 160' de la vis 160 traverse le bord 153 par l'ouverture 155, puis l'élément central 102 par le trou de passage 104, puis le bord 154 par l'ouverture 156, précédemment à un montage serré de l'écrou 161 sur l'extrémité filetée de la tige 160' de la vis 160. Ainsi, selon l'exemple décrit sur la partie inférieure de la Fig. 2, le bord 153 de la rainure 152 est maintenu entre la tête de la vis 160 et une face de l'élément central 102, et le bord 154 de la rainure 152 est maintenu entre l'écrou 161 serré et une autre face de l'élément central 102, opposée à la face sur laquelle s'appuie la tête de la vis 160. Bien évidemment l'exemple décrit n'est pas limitatif et un autre élément de fixation fonctionnellement équivalent au boulon composé de la vis 160 et de l'écrou 161 peut être utilisé.

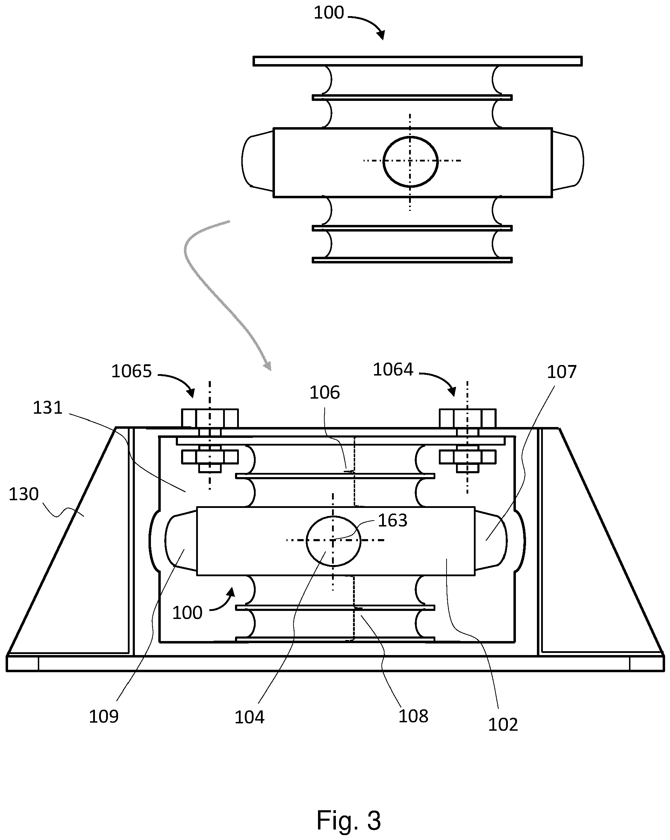

La Fig. 3 représente schématiquement le montage de l'ensemble de liaison 100 déjà décrit sur la Fig. 1 dans une structure primaire 130 d'un aéronef, ou plus précisément dans un élément d'une structure primaire 130 d'un aéronef, selon un mode de réalisation. L'ensemble de liaison 100 est monté dans une ferrure de la structure 130 présentant une cavité traversante 131. Plus précisément, l'ensemble de liaison 100 est logé dans la cavité traversante 131 de la structure 130 et est fixé au moyen de deux boulons 1064 et 1065. Ainsi, selon l'exemple décrit, la Fig. 2 illustre des moyens d'assemblage et de fixation entre l'ensemble de liaison 100 et la structure 150, c'est-à-dire un rail de plancher passagers, et la Fig. 3 illustre des moyens d'assemblage et de fixation entre l'ensemble de liaison 100 et une structure primaire d'un aéronef.

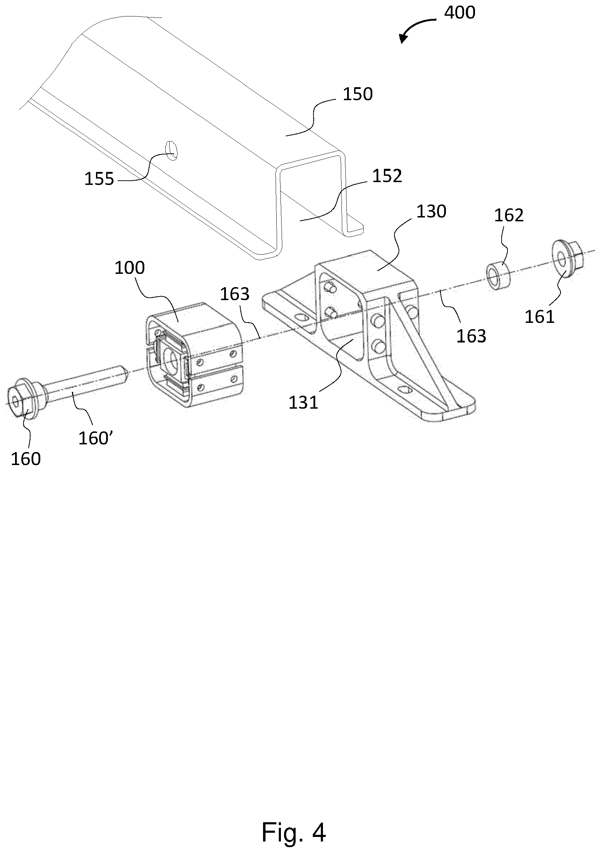

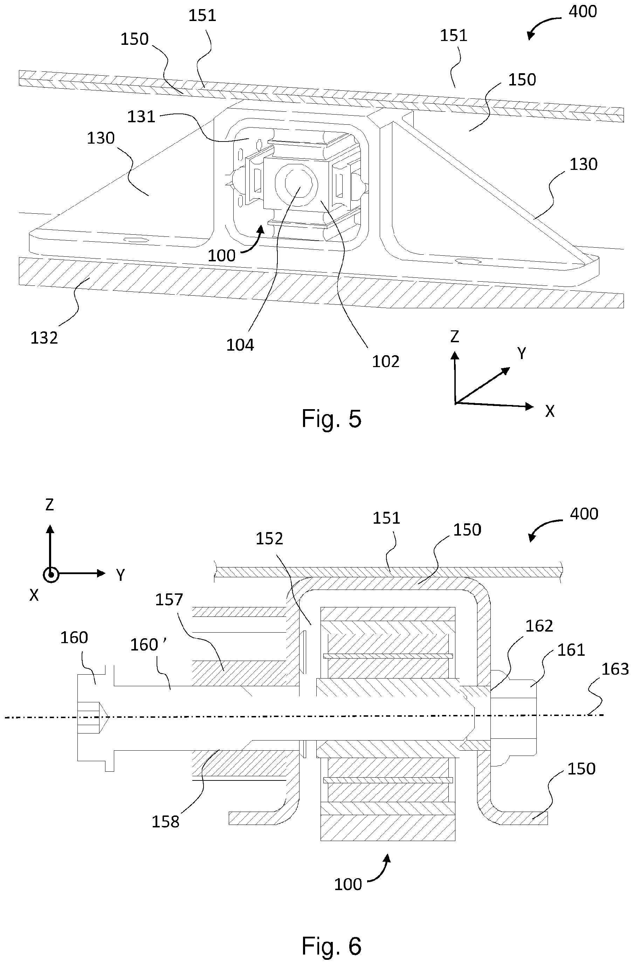

La Fig. 4 est une représentation en perspective d'un assemblage d'une partie d'aéronef 400 comprenant le rail de plancher passagers, ou structure, 150, l'élément d'une structure primaire d'aéronef 130, ainsi qu'un ensemble de liaison 100 entre les deux structures 130 et 150, avant montage. La Fig. 4 permet de mieux se représenter l'insertion de l'ensemble de liaison 100 dans la cavité traversante 131 de la structure 130, puis le chevauchement du rail de plancher 150 en « U » inversé sur l'ensemble formé par l'ensemble de liaison 100 et la structure 130, et enfin la fixation de cet ensemble au moyen d'une vis 160 couplée à un écrou 161 lorsque la tige 160' de la vis 160 est insérée successivement à travers l'ouverture 155 d'un premier bord de la rainure 152 du rail 150, puis à travers le trou de passage 104 de l'ensemble de liaison 100, puis à travers l'ouverture du second bord de la rainure 152, non visible sur la figure, et enfin à travers le filetage de l'écrou 161. Selon le mode de réalisation illustré, un palier 162 est utilisé dans l'ouverture non visible sur cette figure du second bord de rainure, pour faciliter le montage. Les éléments 160, 161, 100, 130, 155, 156, 162 et 161 sont donc tous alignés selon l'axe 163 défini par l'axe central longitudinal du trou de passage de l'ensemble de liaison 100. Selon l'exemple illustré sur la Fig. 5, les plaques de métal terminales 1063 et 1083 des empilements 106 et 108 de couches alternées d'élastomère et de métal présentent des formes de U complémentaires aux surfaces de la cavité traversante 130 disposées en regard de celles-ci après montage.

La Fig. 5 est une représentation schématique illustrant l'assemblage des éléments de la partie d'aéronef 400 déjà représentés sur la Fig. 4 après montage, mais sans les éléments de fixation de type boulon. L'illustration de la structure 150 comprend une coupe partielle de celle-ci permettant de mieux représenter l'insertion de l'élément de structure 130 dans la structure 150 qui n'est autre, selon le mode de réalisation décrit, qu'un rail de plancher passagers en forme de « U » inversé. L'élément de structure 130 est monté sur un autre élément de structure primaire 132, par exemple d'un compartiment de train d'atterrissage ou d'un caisson central de voilure. Un plancher 151 est assemblé sur le rail de plancher passagers 150. Selon un mode de réalisation de l'invention, le plancher 151 est constitué d'une plaque de métal soudée au rail de plancher passagers 150 ou comprend une telle plaque. Selon un mode de réalisation, les sièges passagers sont assemblés sur le plancher 151, directement ou encore par le biais de moyens intermédiaires de fixation.

La Fig. 6 est une coupe selon la direction de référence X représentant une liaison mécanique des deux structures 130 et 150 de la partie d'aéronef 400 au moyen de l'ensemble de liaison 100, lors de l'insertion de la vis 160 dans le trou de passage 104 de l'élément central 102 vers l'écrou 161. Avantageusement un guide 157 présentant un alésage 158 est utilisé pour simplifier les opérations d'assemblage. En effet, selon le mode de réalisation représenté sur la Fig. 6, la tige 160' de la vis 160 présente deux tronçons de diamètres différents. Ainsi, le tronçon proche de la tête de vis présente un diamètre supérieur au tronçon proche de l'extrémité de la tige 160' destinée à recevoir l'écrou 161, et le diamètre de l'alésage 158 est supérieur au diamètre de l'alésage 104 de l'élément central 102 de l'ensemble de liaison 100. Ainsi, il est possible d'engager la tige 160' de la vis 160 aisément et le guide 157 opère en conséquence un pré-positionnement de la vis 160 face à l'alésage 104 de l'élément central 102. En outre, et selon le mode de réalisation illustré sur la Fig. 6, le côté de l'alésage 104, présent en regard du guide d'insertion 157, présente un chanfrein de sorte, là aussi, à faciliter l'insertion de la vis 160 dans l'alésage 104 de l'élément central 102. Ainsi, lorsque la tige 160' de la vis 160 est déjà engagée dans le guide d'insertion 157 et dans l'alésage 104 de l'élément central 102, la déformation des empilements de couches alternées d'élastomère et de métal est telle que l'extrémité de la tige 160' de la vis 160 est alignée avec l'ouverture 156 présente dans le bord de rainure (de rail) situé du côté du rail opposé au côté porteur du guide d'insertion 157. L'insertion de la vis 160 à travers l'ensemble de liaison 100 et le rail 150 s'en trouve conséquemment facilitée. L'angle entre la surface des parties chanfreinées et l'axe 163 de l'alésage 104 peut être plus ou moins ouvert ou fermé selon l'avantage recherché. Ainsi, un angle plutôt fermé permet de couvrir une gamme plus large de valeurs de tolérances au montage alors qu'un angle plus ouvert permet de privilégier la facilité d'insertion. Les opérations de montage sont en conséquence beaucoup plus rapides. Selon le mode de réalisation représenté sur la Fig. 6, l'élément central 102 de l'ensemble de liaison 100 est bloqué en translation selon la direction Y entre le chanfrein de la vis 160 et le bord du rail 150 situé du côté de l'écrou 161. L'ensemble de liaison 100 peut cependant être mobile selon les directions X, Y et Z, du fait de sa structure déformable, ce qui permet avantageusement d'opérer des transferts de charges entre le plancher passagers 151, solidaire de la structure 150 et la structure primaire 130 de l'aéronef. Le palier 162, agencé dans l'ouverture 156 du bord de rail 150, entre l'élément central 102 et l'écrou 161, facilite l'assemblage de l'ensemble.

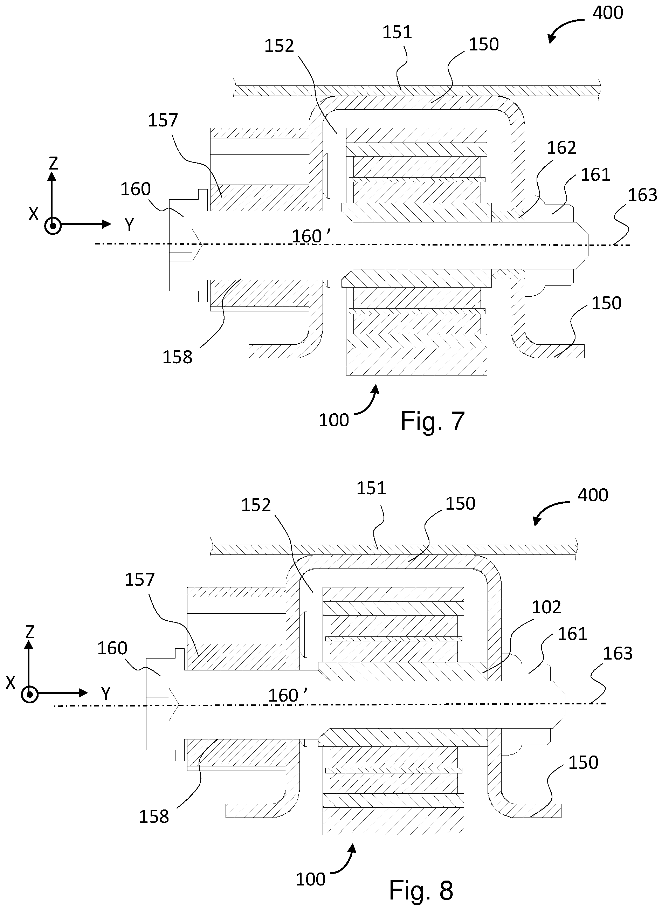

La Fig. 7 illustre les éléments déjà représentés sur la Fig. 6, après assemblage, lorsque la vis 160 est insérée à travers tous les éléments 157, 102, 150, 162 et que l'écrou 161 est monté sur la vis 160, et serré.

La Fig. 8 représente une variante du mode de réalisation déjà représenté sur les Fig. 6 et Fig. 7, selon laquelle il n'est pas utilisé de palier agencé dans l'ouverture 162, et l'élément central 102 se prolonge selon la direction Y pour prendre appui sur le bord du rail de plancher passagers 150.

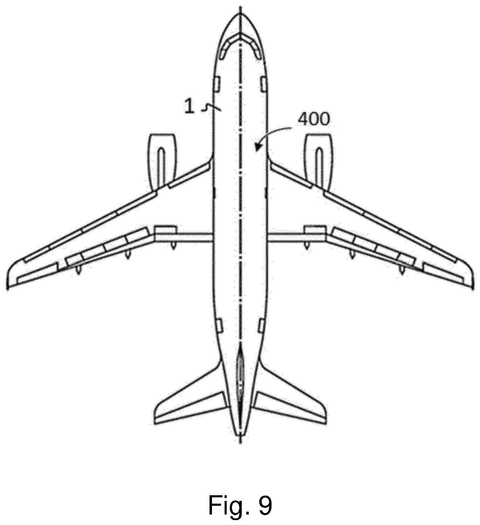

La Fig. 9 représente un aéronef 1 comprenant la partie d'aéronef 400, laquelle partie d'aéronef 400 comprend au moins une partie de la structure 130, au moins une partie de la structure rail plancher passagers 150, l'ensemble de liaison 100 assemblé entre ces deux structures 130 et 150 et l'élément de fixation composé au moins de la vis 160 et de l'écrou 161, ainsi que l'élément ou les éléments de fixation de l'ensemble de liaison 100 à la structure 130, par exemple les boulons 1064 et 1065.

L'invention ne se limite pas aux seuls modes de réalisation et exemples précédemment décrits mais concerne tout ensemble de liaison entre deux structures d'un aéronef, comprenant un élément central fixé sur l'une première des deux structures à partir duquel s'étendent au moins deux premiers éléments amortisseurs faits de matériau déformable, dont les extrémités sont positionnées en appui sur des surfaces de la deuxième structure reliée par l'ensemble de liaison, permettant ainsi de définir avec précisions des caractéristiques non-linéaires de raideur, et comprenant éventuellement deux seconds éléments amortisseurs s'étendant à partir de l'élément central de l'ensemble de liaison, dans une direction perpendiculaire à la direction selon laquelle s'étendent les au moins deux premiers éléments amortisseurs.

## Revendications

1. Ensemble de liaison (100) pour lier deux structures (130, 150) d'un aéronef (1), l'ensemble de liaison (100) comprenant :
- un élément central (102) présentant un trou de passage (104), préférentiellement un alésage, agencé pour opérer une liaison avec l'une desdites deux structures (150) grâce à un élément de fixation (160, 161) comportant une tige (160') insérée dans le trou de passage (104),
- une pluralité d'éléments amortisseurs déformables (106, 108), dits premiers éléments amortisseurs, chacun des premiers éléments amortisseurs (106, 108) étant solidaire dudit élément central (102) d'une part, et configuré pour prendre appui sur une surface de l'autre structure (130) parmi les deux structures (130, 150), d'autre part,
- au moins deux autres éléments amortisseurs (107, 109), dit seconds éléments amortisseurs, fabriqués en matériau déformable, solidaires de l'élément central (102) d'une part, et s'étendant jusqu'à une distance prédéterminée d'une surface de l'autre structure (130), d'autre part, les seconds éléments amortisseurs (107, 109) comprenant éventuellement un ou plusieurs inserts métalliques ou faits d'un autre matériau que ledit matériau déformable, et/ou une ou plusieurs cavités agencées dans le matériau déformable,
l'ensemble de liaison (100) étant **caractérisé en ce que** :
- lesdits premiers éléments amortisseurs (106, 108) s'étendent chacun extérieurement, à partir de l'élément central (102), suivant une direction perpendiculaire à un axe longitudinal (163) dudit trou de passage, et **en ce que** :
- lesdits seconds éléments amortisseurs (107, 109) s'étendent chacun extérieurement à partir de l'élément central (102) suivant une direction perpendiculaire à l'axe longitudinal (163) dudit trou de passage (104), différente de la direction selon laquelle s'étendent les premiers éléments amortisseurs (106, 108).

2. Ensemble de liaison (100) selon la revendication 1, dans lequel lesdits premiers éléments amortisseurs (106, 108) sont des empilements (106, 108) de couches alternées (1060, 1062, 1080, 1082) respectivement faites d'un matériau déformable et d'éléments (1061, 1063, 1081, 1083) faits d'un autre matériau.

3. Ensemble de liaison (100) selon l'une des revendications 1 et 2, dans lequel l'élément central (102) présente six faces (1041, 1042, 1043, 1044, 1045, 1046) parallèles deux à deux, parmi lesquelles :
- deux premières faces (1041, 1042) sont traversées par ledit trou de passage (104), ledit axe longitudinal définissant une première direction (Y) de référence,
- deux secondes faces (1043, 1044) portent lesdits empilements (106, 108) de couches alternées (1060, 1062, 1080, 1082) faites d'un matériau déformable et d'éléments (1061, 1063, 1081, 1083) faits d'un autre matériau, et s'étendent à partir de l'élément central dans une deuxième direction (Z) de référence, perpendiculaire à l'axe longitudinal (163) du trou de passage (104),
- deux troisièmes faces (1045, 1046) portent lesdits éléments amortisseurs (107, 109) et s'étendent chacun extérieurement à partir de l'élément central (102) suivant une troisième direction (X) de référence, perpendiculaire à l'axe longitudinal (163) dudit trou de passage (104) et perpendiculaire à la deuxième direction (Z) de référence.

4. Ensemble de liaison (100) selon la revendication 3, dans lequel la troisième direction (X) de référence est parallèle à un axe longitudinal du fuselage d'un aéronef dans lequel est embarqué l'ensemble de liaison, la deuxième direction de référence (Z) est comprise dans un plan vertical ou sensiblement vertical et la première direction (Y) de référence est comprise dans un plan horizontal ou sensiblement horizontal.

5. Ensemble de liaison (100) selon l'une quelconque des revendications 2 à 4, dans lequel les empilements (106, 108) de couches alternées comprennent chacun au moins deux couches du matériau déformable et deux éléments faits d'un autre matériau, préférentiellement métallique.

6. Ensemble de liaison (100) selon l'une quelconque des revendications 2 à 5, dans lequel le matériau déformable est un élastomère et l'élément de fixation (160, 161) est un boulon comprenant une vis (160) et un écrou (161), la vis (160) comprenant une portion (160') configurée pour être insérée dans le trou de passage (104) de l'élément central (102) de l'ensemble de liaison (100).

7. Partie d'aéronef (400) comprenant une première structure (130), une deuxième structure (150) et un ensemble de liaison (100), déformable, selon l'une quelconque des revendications 1 à 6 pour relier la première structure (130) à la deuxième structure (150), dans laquelle :
- la première structure (130) est une structure primaire, ou un élément de structure primaire de ladite partie d'aéronef (400),
- la deuxième structure (150) est un rail de plancher passagers (150) de ladite partie d'aéronef (400),
- la première structure (130) comprend une cavité traversante (131), de forme complémentaire à un profil extérieur de l'ensemble de liaison (100), agencée pour y loger l'ensemble de liaison (100), la partie opposée de chacun desdits premiers éléments amortisseurs (106, 108) venant prendre appui sur ou étant fixée solidairement à une surface de ladite cavité (131),
- la deuxième structure (150) comprend une rainure (152) agencée pour accueillir une partie de la première structure (130) comprenant ladite cavité (131), chacun des bords (153, 154) de la rainure comprenant une ouverture de passage parmi deux ouvertures (155, 156) de passage disposées en regard l'une de l'autre, et, dans laquelle l'élément de fixation (160, 161) est un boulon traversant lesdites ouvertures (155, 156) des bords (153, 154) de ladite rainure et ledit trou de passage (104) de l'élément central (102) de l'ensemble de liaison (100), de sorte qu'aucune liaison rigide ne relie ledit rail de plancher passagers (150) à la structure primaire (130).

8. Partie d'aéronef (400) selon la revendication 7, dans laquelle le trou de passage (104) est un premier alésage présentant un premier diamètre et un premier axe longitudinal central (163), et dans laquelle un guide d'insertion (157) est assemblé sur l'un des bords extérieurs (153, 154) de la rainure (152), le guide d'insertion (157) comprenant un second alésage (158) d'un second diamètre supérieur au diamètre du premier alésage, et le second alésage (158) présentant un second axe longitudinal central confondu ou sensiblement confondu avec ledit premier axe longitudinal central (163), les ouvertures de passage présentant un diamètre supérieur au premier diamètre, et préférentiellement égal au second diamètre.

9. Aéronef (1) comprenant une partie d'aéronef (400) selon l'une des revendications 7 et 8.

## Patentansprüche

1. Verbindungsanordnung (100) zum Verbinden von zwei Strukturen (130, 150) eines Luftfahrzeugs (1), wobei die Verbindungsanordnung (100) umfasst:
- ein zentrales Element (102), das ein Durchgangsloch (104), vorzugsweise eine Bohrung, aufweist, das dafür ausgelegt ist, eine Verbindung mit einer der zwei Strukturen (150) mithilfe eines Befestigungselements (160, 161) herzustellen, das einen Schaft (160') aufweist, der in das Durchgangsloch (104) eingesetzt wird,
- mehrere verformbare Dämpfungselemente (106, 108), erste Dämpfungselemente genannt, wobei jedes der ersten Dämpfungselemente (106, 108) einerseits mit dem zentralen Element (102) fest verbunden ist und andererseits dazu ausgebildet ist, sich an einer Fläche der anderen Struktur (130) von den zwei Strukturen (130, 150) abzustützen,
- mindestens zwei weitere Dämpfungselemente (107, 109), zweite Dämpfungselemente genannt, die aus einem verformbaren Material hergestellt sind und die einerseits mit dem zentralen Element (102) fest verbunden sind und sich andererseits bis zu einer vorbestimmten Entfernung von einer Fläche der anderen Struktur (130) erstrecken, wobei die zweiten Dämpfungselemente (107, 109) eventuell einen oder mehrere metallische oder aus einem anderen Material als das verformbare Material hergestellte Einsätze und/oder einen oder mehrere in dem verformbaren Material angeordnete Hohlräume umfassen,
wobei die Verbindungsanordnung (100) **dadurch gekennzeichnet ist, dass**:
- die ersten Dämpfungselemente (106, 108) sich jeweils außen von dem zentralen Element (102) aus in einer zu einer Längsachse (163) des Durchgangslochs senkrechten Richtung erstrecken, und dadurch, dass:
- die zweiten Dämpfungselemente (107, 109) sich jeweils außen von dem zentralen Element (102) aus in einer zur Längsachse (163) des Durchgangslochs (104) senkrechten Richtung erstrecken, die von der Richtung, in der sich die ersten Dämpfungselemente (106, 108) erstrecken, verschieden ist.

2. Verbindungsanordnung (100) nach Anspruch 1, wobei die ersten Dämpfungselemente (106, 108) Stapel (106, 108) von abwechselnden Schichten (1060, 1062, 1080, 1082), die aus einem verformbaren Material hergestellt sind, bzw. von aus einem anderen Material hergestellten Elementen (1061, 1063, 1081, 1083) sind.

3. Verbindungsanordnung (100) nach einem der Ansprüche 1 und 2, wobei das zentrale Element (102) sechs paarweise parallele Seiten (1041, 1042, 1043, 1044, 1045, 1046) aufweist, von denen:
- zwei erste Seiten (1041, 1042) von dem Durchgangsloch (104) durchquert werden, wobei die Längsachse eine erste Referenzrichtung (Y) definiert,
- zwei zweite Seiten (1043, 1044) die Stapel (106, 108) von abwechselnden Schichten (1060, 1062, 1080, 1082), die aus einem verformbaren Material hergestellt sind, und von aus einem anderen Material hergestellten Elementen (1061, 1063, 1081, 1083) tragen, die sich von dem zentralen Element aus in einer zweiten Referenzrichtung (Z) erstrecken, die zur Längsachse (163) des Durchgangslochs (104) senkrecht ist,
- zwei dritte Seiten (1045, 1046) die Dämpfungselemente (107, 109) tragen und sich jeweils außen von dem zentralen Element (102) aus in einer dritten Referenzrichtung (X) erstrecken, die zur Längsachse (163) des Durchgangslochs (104) senkrecht ist und zur zweiten Referenzrichtung (Z) senkrecht ist.

4. Verbindungsanordnung (100) nach Anspruch 3, wobei die dritte Referenzrichtung (X) parallel zu einer Längsachse des Rumpfes eines Luftfahrzeugs ist, in dem sich die Verbindungsanordnung an Bord befindet, die zweite Referenzrichtung (Z) in einer vertikalen oder im Wesentlichen vertikalen Ebene liegt und die erste Referenzrichtung (Y) in einer horizontalen oder im Wesentlichen horizontalen Ebene liegt.

5. Verbindungsanordnung (100) nach einem der Ansprüche 2 bis 4, wobei die Stapel (106, 108) von abwechselnden Schichten jeweils mindestens zwei Schichten des verformbaren Materials und zwei aus einem anderen, vorzugsweise metallischen Material hergestellte Elemente umfassen.

6. Verbindungsanordnung (100) nach einem der Ansprüche 2 bis 5, wobei das verformbare Material ein Elastomer ist und das Befestigungselement (160, 161) ein Bolzen ist, der eine Schraube (160) und eine Mutter (161) umfasst, wobei die Schraube (160) einen Abschnitt (160') umfasst, der dazu ausgebildet ist, in das Durchgangsloch (104) des zentralen Elements (102) der Verbindungsanordnung (100) eingesetzt zu werden.

7. Luftfahrzeugteil (400), welches eine erste Struktur (130), eine zweite Struktur (150) und eine verformbare Verbindungsanordnung (100) nach einem der Ansprüche 1 bis 6, um die erste Struktur (130) mit der zweiten Struktur (150) zu verbinden, umfasst, wobei:
- die erste Struktur (130) eine primäre Struktur oder ein primäres Strukturelement des Luftfahrzeugteils (400) ist,
- die zweite Struktur (150) eine Bodenschiene (150) der Passagierkabine des Luftfahrzeugteils (400) ist,
- die erste Struktur (130) einen durchgehenden Hohlraum (131) mit einer zu einem Außenprofil der Verbindungsanordnung (100) komplementären Form umfasst, der dafür ausgelegt ist, die Verbindungsanordnung (100) hierin aufzunehmen, wobei der gegenüberliegende Teil jedes der ersten Dämpfungselemente (106, 108) an einer Fläche des Hohlraums (131) zur Anlage kommt oder fest an ihr befestigt ist,
- die zweite Struktur (150) eine Nut (152) umfasst, die dafür ausgelegt ist, einen Teil der ersten Struktur (130) aufzunehmen, der den Hohlraum (131) umfasst, wobei jeder der Ränder (153, 154) der Nut eine Durchgangsöffnung von zwei Durchgangsöffnungen (155, 156) umfasst, die einander gegenüber angeordnet sind, und wobei das Befestigungselement (160, 161) ein Bolzen ist, der die Öffnungen (155, 156) der Ränder (153, 154) der Nut und das Durchgangsloch (104) des zentralen Elements (102) der Verbindungsanordnung (100) durchquert, so dass keine starre Verbindung die Bodenschiene (150) der Passagierkabine mit der primären Struktur (130) verbindet.

8. Luftfahrzeugteil (400) nach Anspruch 7, wobei das Durchgangsloch (104) eine erste Bohrung ist, die einen ersten Durchmesser und eine erste Mittellängsachse (163) aufweist, und wobei eine Einsetzführung (157) an einen der Außenränder (153, 154) der Nut (152) angebaut ist, wobei die Einsetzführung (157) eine zweite Bohrung (158) mit einem zweiten Durchmesser, der größer als der Durchmesser der ersten Bohrung ist, umfasst, und wobei die zweite Bohrung (158) eine zweite Mittellängsachse aufweist, die mit der ersten Mittellängsachse (163) zusammenfällt oder im Wesentlichen zusammenfällt, wobei die Durchgangsöffnungen eine Durchmesser aufweisen, der größer als der erste Durchmesser und vorzugsweise gleich dem zweiten Durchmesser ist.

9. Luftfahrzeug (1), welches ein Luftfahrzeugteil (400) nach einem der Ansprüche 7 und 8 umfasst.

## Claims

1. Connecting assembly (100) for connecting two structures (130, 150) of an aircraft (1), the connecting assembly (100) comprising:
- a central element (102) having a through-hole (104), preferably a bore, designed to make a connection with one of said two structures (150) by virtue of a fastener element (160, 161) comprising a shank (160') inserted into the through-hole (104),
- a plurality of deformable shock-absorbing elements (106, 108), referred to as first shock-absorbing elements, each of the first shock-absorbing elements (106, 108) being, on the one hand, secured to said central element (102) and, on the other hand, configured to bear against a surface of the other structure (130) of the two structures (130, 150),
- at least two other shock-absorbing elements (107, 109), referred to as second shock-absorbing elements, manufactured from a deformable material, and, on the one hand, secured to the central element (102) and, on the other hand, extending as far as a predetermined distance away from a surface of the other structure (130), the second shock-absorbing elements (107, 109) potentially comprising one or more metal inserts or inserts made from a material other than said deformable material, and/or one or more cavities arranged in the deformable material,
the connecting assembly (100) being **characterized in that**:
- said first shock-absorbing elements (106, 108) each extend outwards, from the central element (102), in a direction perpendicular to a longitudinal axis (163) of said through-hole, and **in that**:
- said second shock-absorbing elements (107, 109) each extend outwards, from the central element (102), in a direction perpendicular to the longitudinal axis (163) of said through-hole (104), which direction is different from the direction in which the first shock-absorbing elements (106, 108) extend.

2. Connecting assembly (100) according to Claim 1, wherein said first shock-absorbing elements (106, 108) are stacks (106, 108) of alternating layers (1060, 1062, 1080, 1082) respectively made from a deformable material and of elements (1061, 1063, 1081, 1083) made of another material.

3. Connecting assembly (100) according to one of Claims 1 and 2, wherein the central element (102) has six faces (1041, 1042, 1043, 1044, 1045, 1046), pairs of which are parallel, and of which:
- two first faces (1041, 1042) have said through-hole (104) passing through them, said longitudinal axis defining a first reference direction (Y),
- two second faces (1043, 1044) bear said stacks (106, 108) of alternating layers (1060, 1062, 1080, 1082) made from a deformable material and of elements (1061, 1063, 1081, 1083) made of another material, and extend from the central element in a second reference direction (Z) perpendicular to the longitudinal axis (163) of the through-hole (104),
- two third faces (1045, 1046) bear said shock-absorbing elements (107, 109) and each extend outwards from the central element (102) in a third reference direction (X), perpendicular to the longitudinal axis (163) of said through-hole (104) and perpendicular to the second reference direction (Z).

4. Connecting assembly (100) according to Claim 3, wherein the third reference direction (X) is parallel to a longitudinal axis of the fuselage of an aircraft on which the connecting assembly is carried, the second reference direction (Z) is contained in a vertical or substantially vertical plane, and the first reference direction (Y) is contained in a horizontal or substantially horizontal plane.

5. Connecting assembly (100) according to any one of Claims 2 to 4, wherein the stacks (106, 108) of alternating layers each comprise at least two layers of the deformable material and two elements made of another material, preferably metallic.

6. Connecting assembly (100) according to any one of Claims 2 to 5, wherein the deformable material is an elastomer and the fastener element (160, 161) is a threaded fastener comprising a bolt (160) and a nut (161), the bolt (160) comprising a portion (160') configured to be inserted into the through-hole (104) of the central element (102) of the connecting assembly (100).

7. Aircraft part (400) comprising a first structure (130), a second structure (150) and a deformable connecting assembly (100) according to any one of Claims 1 to 6 for connecting the first structure (130) to the second structure (150), wherein:
- the first structure (130) is a primary structure or a primary structure element of said aircraft part (400),
- the second structure (150) is a cabin floor rail (150) of said aircraft part (400),
- the first structure (130) comprises a through-cavity (131) of a shape that complements an exterior profile of the connecting assembly (100) and designed to house the connecting assembly (100) therein, the facing part of each of said first shock-absorbing elements (106, 108) coming to bear against or being securely fastened to a surface of said cavity (131),
- the second structure (150) comprises a groove (152) designed to accommodate part of the first structure (130) comprising said cavity (131), each of the edges (153, 154) of the groove comprising one of two through-openings (155, 156) positioned facing one another and wherein the fastener element (160, 161) is a threaded fastener passing through said openings (155, 156) of the edges (153, 154) of said groove and said through-hole (104) of the central element (102) of the connecting assembly (100), such that there is no rigid connection connecting said cabin floor rail (150) to the primary structure (130).

8. Aircraft part (400) according to Claim 7, wherein the through-hole (104) is a first bore having a first diameter and a first central longitudinal axis (163) and wherein an insertion guide (157) is assembled on one of the outer edges (153, 154) of the groove (152), the insertion guide (157) comprising a second bore (158) of a second diameter greater than the diameter of the first bore, and the second bore (158) having a second central longitudinal axis coincident or substantially coincident with said first central longitudinal axis (163), the through-openings having a diameter greater than the first diameter and preferably equal to the second diameter.

9. Aircraft (1) comprising an aircraft part (400) according to one of Claims 7 and 8.
